# EUROPEAN PATENT SPECIFICATION

(11) **EP 2 715 977 B1**
(45) Date of publication and mention of the grant of the patent: **15.08.2018**
(21) Application number: 12726312.7
(22) Date of filing: 31.05.2012
(51) Int. Cl.: H04L 12/703, H04L 12/24

(54) **MANAGEMENT OF MISBEHAVING NODES IN A COMPUTER NETWORK**
VERWALTUNG VON FEHLERBEHAFTETEN KNOTEN IN EINEM COMPUTERNETZWERK
GESTION DE NOEUDS SE CONDUISANT MAL DANS UN RÉSEAU INFORMATIQUE

(30) Priority: 01.06.2011 US 201113150866
(43) Date of publication of application: 09.04.2014
(73) Proprietor: Cisco Technology, Inc., San Jose, CA 95134 (US)
(72) Inventor: VASSEUR, Jean-Philippe, F-38410 Saint Martin d'Uriage (FR); SHAFFER, Shmuel, Palo Alto, CA 94301 (US); HUI, Jonathan, W., Foster City, CA 94404 (US)
(74) Representative: Kazi, Ilya
(86) International application number: PCT/US2012/040162
(87) International publication number: WO 2012/166886

(56) References cited:
- US-A1- 2009 168 645
- WINTER T ET AL: "RPL: IPv6 Routing Protocol for Low power and Lossy Networks; draft-ietf-roll-rpl-19.txt", RPL: IPV6 ROUTING PROTOCOL FOR LOW POWER AND LOSSY NETWORKS; DRAFT-IETF-ROLL-RPL-19.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 19, 14 March 2011 (2011-03-14), pages 1-163, XP015074831, [retrieved on 2011-03-14] cited in the application
- KERSCHBERG L ET AL: "Managing faults in telecommunications networks: a taxonomy to knowledge-based approaches", DECISION AIDING FOR COMPLEX SYSTEMS. CHARLOTTESVILLE, VA., OCT. 13 - 16, 1991; [PROCEEDINGS OF THE INTERNATIONAL CONFERENCE ON SYSTEMS, MAN AND CYBERNETICS], NEW YORK, IEEE, US, vol. _, 13 October 1991 (1991-10-13), pages 779-784, XP010054758, DOI: 10.1109/ICSMC.1991.169781 ISBN: 978-0-7803-0233-4

## Description

### TECHNICAL FIELD

The present disclosure relates generally to computer networks, and, more particularly, to management of "misbehaving" nodes in computer networks.

### BACKGROUND

Low power and Lossy Networks (LLNs), e.g., sensor networks, have a myriad of applications, such as Smart Grid and Smart Cities. Various challenges are presented with LLNs, such as lossy links, low bandwidth, battery operation, low memory and/or processing capability, etc. One example routing solution to LLN challenges is a protocol called Routing Protocol for LLNs or "RPL," which is a distance vector routing protocol that builds a Destination Oriented Directed Acyclic Graph (DODAG, or simply DAG) in addition to a set of features to bound the control traffic, support local (and slow) repair, etc. The RPL architecture provides a flexible method by which each node performs DODAG discovery, construction, and maintenance.

Because of the resource-constraints and lossy nature of LLNs (as well as other types of networks), a node that is misconfigured, buggy, or maliciously configured may have a far reaching impact on the overall network. In particular, distributed protocols can often react poorly to such "misbehaving" nodes, thus compromising the overall performance of the network. For instance, as one example of how a single misbehaving node can have a significant adverse impact on the LLN, a misbehaving node may advertise routing updates with a high frequency, which triggers neighboring nodes to also advertise routing updates with a high frequency, consuming channel capacity and energy across the entire network.
US2009/168645 discloses automated network congestion and trouble locator and corrector. Aspects of the invention are recited in the independent claims and preferred features are recited in the dependent claims.

### BRIEF DESCRIPTION OF THE DRAWINGS

The embodiments herein may be better understood by referring to the following description in conjunction with the accompanying drawings in which like reference numerals indicate identically or functionally similar elements, of which:
FIG. 1 illustrates an example computer network;
FIG. 2 illustrates an example network device/node;
FIG. 3 illustrates an example message;
FIG. 4 illustrates an example directed acyclic graph (DAG) in the computer network of FIG. 1;
FIG. 5A illustrates an example of a misbehaving node in the network of FIG. 1;
FIG. 5B illustrates an example of isolation instructions transmission;
FIGS. 6A-D illustrate examples of isolating the misbehaving node;
FIG. 7 illustrates an example simplified procedure for managing misbehaving nodes, from the perspective of the network nodes; and
FIG. 8 illustrates an example simplified procedure for managing misbehaving nodes, from the perspective of a network management service (NMS).

### DESCRIPTION OF EXAMPLE EMBODIMENTS

### Overview

According to one or more embodiments of the disclosure, a node in a computer network detects a misbehaving node in the computer network based on the misbehaving node acting in violation of one or more rules. As such, the node communicates information regarding the misbehaving node to a network management system (NMS), and then may receive isolation instructions from the NMS regarding how to isolate the misbehaving node from the computer network. Accordingly, the node may perform the isolation instructions.

In addition, according to one or more embodiments of the disclosure, the NMS receives the communicated information regarding the misbehaving node, and determines whether the misbehaving node should be isolated based on the communicated information. If the misbehaving node should be isolated, then the NMS determines isolation instructions regarding how to isolate the misbehaving node from the computer network, and transmits the isolation instructions to one or more nodes in the computer network, accordingly.

### Description

A computer network is a geographically distributed collection of nodes interconnected by communication links and segments for transporting data between end nodes, such as personal computers and workstations, or other devices, such as sensors, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC) such as IEEE 61334, IEEE P1901.2, and others. In addition, a Mobile Ad-Hoc Network (MANET) is a kind of wireless ad-hoc network, which is generally considered a self-configuring network of mobile routes (and associated hosts) connected by wireless links, the union of which forms an arbitrary topology.

Smart object networks, such as sensor networks, in particular, are a specific type of network having spatially distributed autonomous devices such as sensors, actuators, etc., that cooperatively monitor physical or environmental conditions at different locations, such as, e.g., energy/power consumption, resource consumption (e.g., water/gas/etc. for advanced metering infrastructure or "AMI" applications) temperature, pressure, vibration, sound, radiation, motion, pollutants, etc. Other types of smart objects include actuators, e.g., responsible for turning on/off an engine or perform any other actions. Sensor networks, a type of smart object network, are typically wireless networks, though wired connections are also available. That is, in addition to one or more sensors, each sensor device (node) in a sensor network may generally be equipped with a radio transceiver or other communication port, a microcontroller, and an energy source, such as a battery. Generally, size and cost constraints on sensor nodes result in corresponding constraints on resources such as energy, memory, computational speed and bandwidth. Correspondingly, a reactive routing protocol may, though need not, be used in place of a proactive routing protocol for sensor networks.

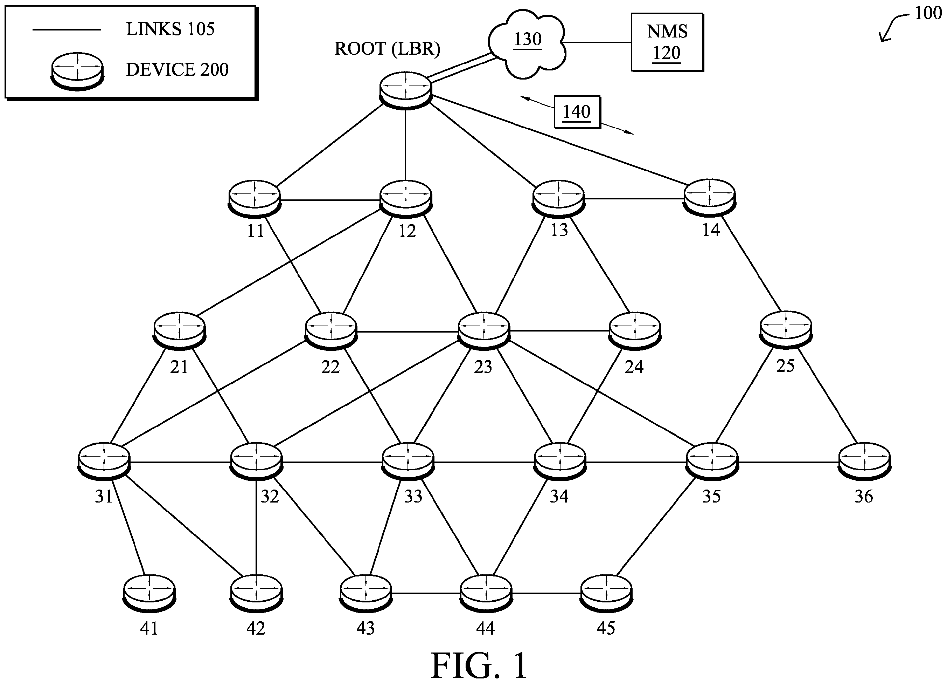

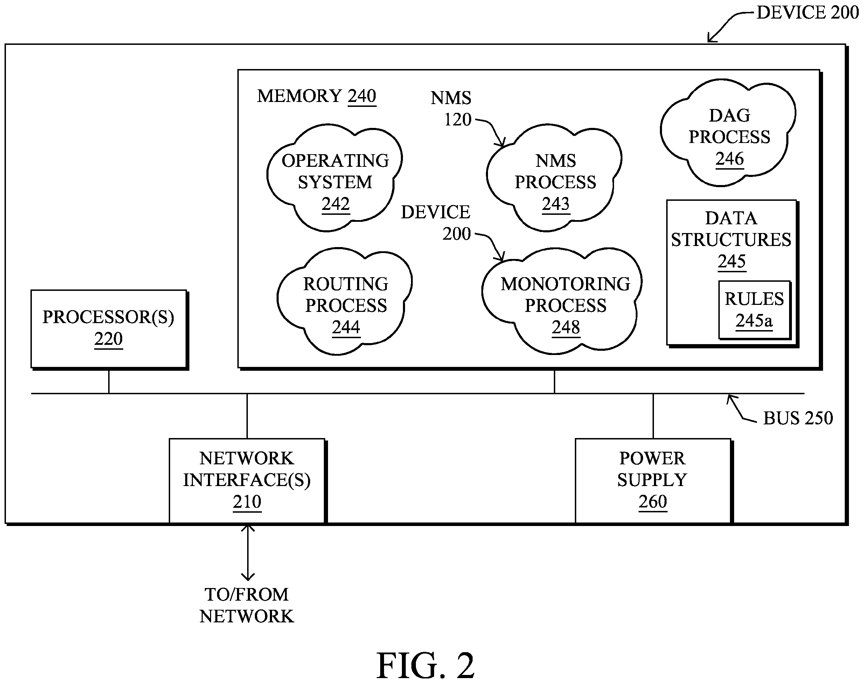

FIG. 1 is a schematic block diagram of an example computer network 100 illustratively comprising nodes/devices 200 (e.g., labeled as shown, "Root," "11," "12," ... "44," "45," and described in FIG. 2 below) interconnected by various methods of communication. For instance, the links 105 may be shared media (e.g., wireless links, PLC links, etc.), where certain nodes 200, such as, e.g., routers, sensors, computers, etc., may be in communication with other nodes 200, e.g., based on distance, signal strength, current operational status, location, etc. In addition, a network management service (NMS) device 120 may be located within or beyond a network cloud 130 (e.g., a WAN), whose general purpose is to manage various aspects of the network 100. Those skilled in the art will understand that any number of nodes, devices, links, etc. may be used in the computer network, and that the view shown herein is for simplicity. Also, while the embodiments are shown herein with reference to a generally "tree" shaped network, the description herein is not so limited, and may be applied to networks that have branches emitting to all directions from with the root node generally centralized among a plurality of surrounding nodes

Data packets 140 (e.g., traffic and/or messages sent between the devices/nodes) may be exchanged among the nodes/devices of the computer network 100 using predefined network communication protocols such as certain known wireless protocols (e.g., IEEE Std. 802.15.4, WiFi, Bluetooth®, etc.) or other shared media protocols where appropriate. In this context, a protocol consists of a set of rules defining how the nodes interact with each other.

FIG. 2 is a schematic block diagram of an example device that may be used with one or more embodiments described herein, e.g., as nodes 11-45 and ROOT (device 200), as well as the NMS 120. The device may comprise one or more network interfaces 210 (e.g., wireless), at least one processor 220, and a memory 240 interconnected by a system bus 250, as well as a power supply 260 (e.g., battery, plug-in, etc.).

The network interface(s) 210 contain the mechanical, electrical, and signaling circuitry for communicating data over links 105 coupled to the network 100 (e.g., wirelessly). The network interfaces may be configured to transmit and/or receive data using a variety of different communication protocols, particularly depending upon the underlying transmission medium (e.g., wireless, PLC, wired, etc.). Note, further, that a node may have two different types of network connections 210, namely, wireless and wired/physical connections, and that the view herein is merely for illustration.

The memory 240 comprises a plurality of storage locations that are addressable by the processor 220 and the network interfaces 210 for storing software programs and data structures associated with the embodiments described herein. Note that certain devices may have limited memory or no memory (e.g., no memory for storage other than for programs/processes operating on the device). The processor 220 may comprise necessary elements or logic adapted to execute the software programs and manipulate the data structures 245, such as rules 245a described herein. An operating system 242, portions of which are typically resident in memory 240 and executed by the processor, functionally organizes the device by, *inter alia,* invoking operations in support of software processes and/or services executing on the device, particularly depending upon which type of device it is, i.e., a network node 200 or an NMS 120. For instance, these software processes and/or services on a network node 200 may comprise routing process/services 244, which may include a directed acyclic graph (DAG) process 246 in certain embodiments, and also an illustrative monitoring process 248 as described herein. Alternatively, for the NMS 120, these software processes and/or services on a network node 200 may comprise at least an NMS process 243, also as described herein. Note that in certain embodiments, the NMS 120 and network device 200 may be resident on the same physical device, such as a root node also configured as a head-end node, etc.

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while the processes have been shown separately, those skilled in the art will appreciate that processes may be routines or modules within other processes.

Routing process (services) 244 contains computer executable instructions executed by the processor 220 to perform functions provided by one or more routing protocols, such as proactive or reactive routing protocols as will be understood by those skilled in the art. These functions may, on capable devices, be configured to manage a routing/forwarding table 245 containing, e.g., data used to make routing/forwarding decisions. In particular, in proactive routing, connectivity is discovered and known prior to computing routes to any destination in the network, e.g., link state routing such as Open Shortest Path First (OSPF), or Intermediate-System-to-Intermediate-System (ISIS), or Optimized Link State Routing (OLSR). Reactive routing, on the other hand, discovers neighbors (i.e., does not have an *a priori* knowledge of network topology), and in response to a needed route to a destination, sends a route request into the network to determine which neighboring node may be used to reach the desired destination. Example reactive routing protocols may comprise Ad-hoc On-demand Distance Vector (AODV), Dynamic Source Routing (DSR), DYnamic MANET On-demand Routing (DYMO), etc. Notably, on devices not capable or configured to store routing entries, routing process 244 may consist solely of providing mechanisms necessary for source routing techniques. That is, for source routing, other devices in the network can tell the less capable devices exactly where to send the packets, and the less capable devices simply forward the packets as directed.

Low power and Lossy Networks (LLNs), e.g., certain sensor networks, may be used in a myriad of applications such as for "Smart Grid" and "Smart Cities." A number of challenges in LLNs have been presented, such as:
1) Links are generally lossy, such that a Packet Delivery Rate/Ratio (PDR) can dramatically vary due to various sources of interferences, e.g., considerably affecting the bit error rate (BER);
2) Links are generally low bandwidth, such that control plane traffic must generally be bounded and negligible compared to the low rate data traffic;
3) There are a number of use cases that require specifying a set of link and node metrics, some of them being dynamic, thus requiring specific smoothing functions to avoid routing instability, considerably draining bandwidth and energy;
4) Constraint-routing may be required by some applications, e.g., to establish routing paths that will avoid non-encrypted links, nodes running low on energy, etc.;
5) Scale of the networks may become very large, e.g., on the order of several thousands to millions of nodes; and
6) Nodes may be constrained with a low memory, a reduced processing capability, a low power supply (e.g., battery).

In other words, LLNs are a class of network in which both the routers and their interconnect are constrained: LLN routers typically operate with constraints, e.g., processing power, memory, and/or energy (battery), and their interconnects are characterized by, illustratively, high loss rates, low data rates, and/or instability. LLNs are comprised of anything from a few dozen and up to thousands or even millions of LLN routers, and support point-to-point traffic (between devices inside the LLN), point-to-multipoint traffic (from a central control point to a subset of devices inside the LLN) and multipoint-to-point traffic (from devices inside the LLN towards a central control point).

An example protocol specified in an Internet Engineering Task Force (IETF) Internet Draft, entitled "RPL: IPv6 Routing Protocol for Low Power and Lossy Networks" <draft-ietf-roll-rpl-19> by Winter, at al. (March 13, 2011 version), provides a mechanism that supports multipoint-to-point (MP2P) traffic from devices inside the LLN towards a central control point (e.g., LLN Border Routers (LBRs) or "root nodes/devices" generally), as well as point-to-multipoint (P2MP) traffic from the central control point to the devices inside the LLN (and also point-to-point, or "P2P" traffic). RPL (pronounced "ripple") may generally be described as a distance vector routing protocol that builds a Directed Acyclic Graph (DAG) for use in routing traffic/packets 140, in addition to defining a set of features to bound the control traffic, support repair, etc. Notably, as may be appreciated by those skilled in the art, RPL also supports the concept of Multi-Topology-Routing (MTR), whereby multiple DAGs can be built to carry traffic according to individual requirements.

A DAG is a directed graph having the property that all edges are oriented in such a way that no cycles (loops) are supposed to exist. All edges are contained in paths oriented toward and terminating at one or more root nodes (e.g., "clusterheads or "sinks"), often to interconnect the devices of the DAG with a larger infrastructure, such as the Internet, a wide area network, or other domain. In addition, a Destination Oriented DAG (DODAG) is a DAG rooted at a single destination, i.e., at a single DAG root with no outgoing edges. A "parent" of a particular node within a DAG is an immediate successor of the particular node on a path towards the DAG root, such that the parent has a lower "rank" than the particular node itself, where the rank of a node identifies the node's position with respect to a DAG root (e.g., the farther away a node is from a root, the higher is the rank of that node). Further, in certain embodiments, a sibling of a node within a DAG may be defined as any neighboring node which is located at the same rank within a DAG. Note that siblings do not necessarily share a common parent, and routes between siblings are generally not part of a DAG since there is no forward progress (their rank is the same). Note also that a tree is a kind of DAG, where each device/node in the DAG generally has one parent or one preferred parent.

DAGs may generally be built (e.g., by DAG process 246) based on an Objective Function (OF). The role of the Objective Function is generally to specify rules on how to build the DAG (e.g. number of parents, backup parents, etc.).

In addition, one or more metrics/constraints may be advertised by the routing protocol to optimize the DAG against. Also, the routing protocol allows for including an optional set of constraints to compute a constrained path, such as if a link or a node does not satisfy a required constraint, it is "pruned" from the candidate list when computing the best path. (Alternatively, the constraints and metrics may be separated from the OF.) Additionally, the routing protocol may include a "goal" that defines a host or set of hosts, such as a host serving as a data collection point, or a gateway providing connectivity to an external infrastructure, where a DAG's primary objective is to have the devices within the DAG be able to reach the goal. In the case where a node is unable to comply with an objective function or does not understand or support the advertised metric, it may be configured to join a DAG as a leaf node. As used herein, the various metrics, constraints, policies, etc., are considered "DAG parameters."

Illustratively, example metrics used to select paths (e.g., preferred parents) may comprise cost, delay, latency, bandwidth, expected transmission count (ETX), etc., while example constraints that may be placed on the route selection may comprise various reliability thresholds, restrictions on battery operation, multipath diversity, bandwidth requirements, transmission types (e.g., wired, wireless, etc.). The OF may provide rules defining the load balancing requirements, such as a number of selected parents (e.g., single parent trees or multi-parent DAGs). Notably, an example for how routing metrics and constraints may be obtained may be found in an IETF Internet Draft, entitled "Routing Metrics used for Path Calculation in Low Power and Lossy Networks" <draft-ietf-roll-routing-metrics-19> by Vasseur, et al. (March 1, 2011 version). Further, an example OF (e.g., a default OF) may be found in an IETF Internet Draft, entitled "RPL Objective Function 0" <draft-ietf-roll-of0-11> by Thubert (May 5, 2011 version) and "The Minimum Rank Objective Function with Hysteresis" <draft-ietf-roll-minrank-hysteresis-of-03> by O. Gnawali et al. (May 3, 2011 version).

Building a DAG may utilize a discovery mechanism to build a logical representation of the network, and route dissemination to establish state within the network so that routers know how to forward packets toward their ultimate destination. Note that a "router" refers to a device that can forward as well as generate traffic, while a "host" refers to a device that can generate but does not forward traffic. Also, a "leaf' may be used to generally describe a non-router that is connected to a DAG by one or more routers, but cannot itself forward traffic received on the DAG to another router on the DAG. Control messages may be transmitted among the devices within the network for discovery and route dissemination when building a DAG.

According to the illustrative RPL protocol, a DODAG Information Object (DIO) is a type of DAG discovery message that carries information that allows a node to discover a RPL Instance, learn its configuration parameters, select a DODAG parent set, and maintain the upward routing topology. In addition, a Destination Advertisement Object (DAO) is a type of DAG discovery reply message that conveys destination information upwards along the DODAG so that a DODAG root (and other intermediate nodes) can provision downward routes. A DAO message includes prefix information to identify destinations, a capability to record routes in support of source routing, and information to determine the freshness of a particular advertisement. Notably, "upward" or "up" paths are routes that lead in the direction from leaf nodes towards DAG roots, e.g., following the orientation of the edges within the DAG. Conversely, "downward" or "down" paths are routes that lead in the direction from DAG roots towards leaf nodes, e.g., generally going in the opposite direction to the upward messages within the DAG.

Generally, a DAG discovery request (e.g., DIO) message is transmitted from the root device(s) of the DAG downward toward the leaves, informing each successive receiving device how to reach the root device (that is, from where the request is received is generally the direction of the root). Accordingly, a DAG is created in the upward direction toward the root device. The DAG discovery reply (e.g., DAO) may then be returned from the leaves to the root device(s) (unless unnecessary, such as for UP flows only), informing each successive receiving device in the other direction how to reach the leaves for downward routes. Nodes that are capable of maintaining routing state may aggregate routes from DAO messages that they receive before transmitting a DAO message. Nodes that are not capable of maintaining routing state, however, may attach a next-hop parent address. The DAO message is then sent directly to the DODAG root that can in turn build the topology and locally compute downward routes to all nodes in the DODAG. Such nodes are then reachable using source routing techniques over regions of the DAG that are incapable of storing downward routing state. In addition, RPL also specifies a message called the DIS (DODAG Information Solicitation) message that is sent under specific circumstances so as to discover DAG neighbors and join a DAG or restore connectivity.

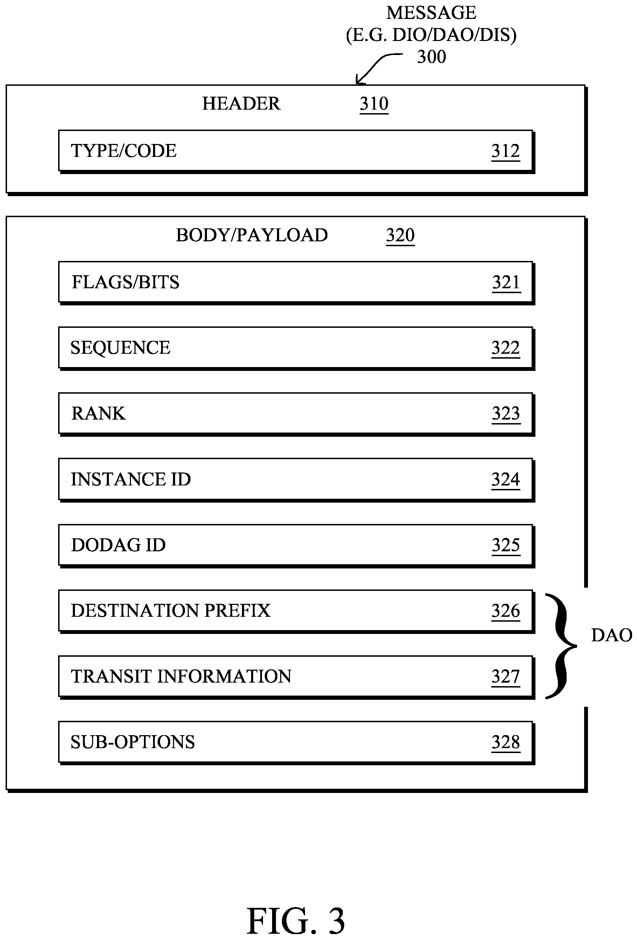

FIG. 3 illustrates an example simplified control message format 300 that may be used for discovery and route dissemination when building a DAG, e.g., as a DIO, DAO, or DIS message. Message 300 illustratively comprises a header 310 with one or more fields 312 that identify the type of message (e.g., a RPL control message), and a specific code indicating the specific type of message, e.g., a DIO, DAO, or DIS. Within the body/payload 320 of the message may be a plurality of fields used to relay the pertinent information. In particular, the fields may comprise various flags/bits 321, a sequence number 322, a rank value 323, an instance ID 324, a DODAG ID 325, and other fields, each as may be appreciated in more detail by those skilled in the art. Further, for DAO messages, additional fields for destination prefixes 326 and a transit information field 327 may also be included, among others (e.g., DAO_Sequence used for ACKs, etc.). For any type of message 300, one or more additional sub-option fields 328 may be used to supply additional or custom information within the message 300. For instance, an objective code point (OCP) sub-option field may be used within a DIO to carry codes specifying a particular objective function (OF) to be used for building the associated DAG. Alternatively, sub-option fields 328 may be used to carry other certain information within a message 300, such as indications, requests, capabilities, lists, notifications, etc., as may be described herein, e.g., in one or more type-length-value (TLV) fields, such as for messages 520/530 described below.

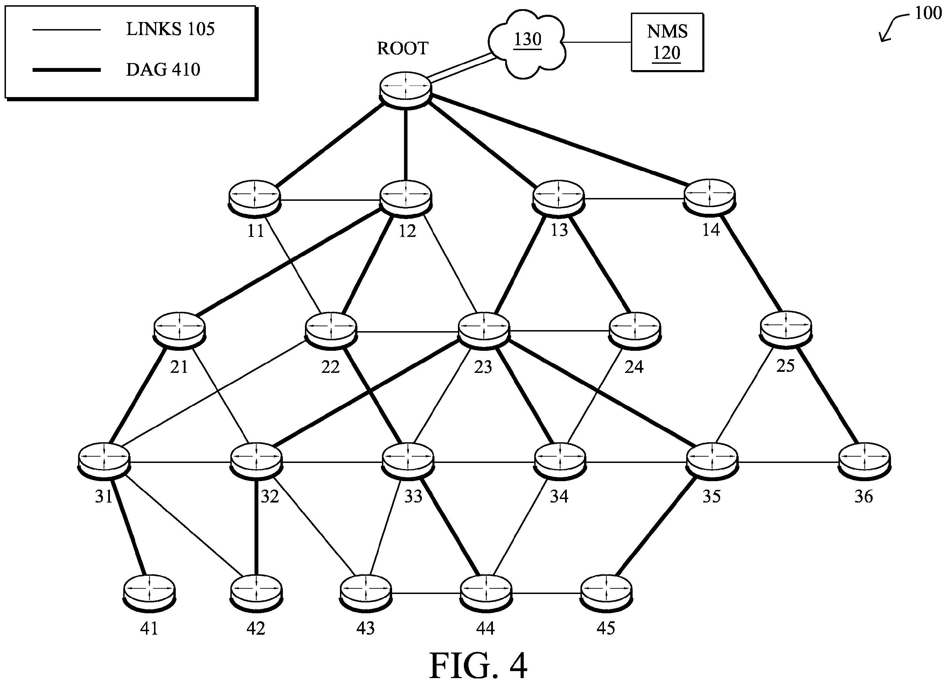

FIG. 4 illustrates an example simplified DAG that may be created, e.g., through the techniques described above, within network 100 of FIG. 1. For instance, certain links 105 may be selected for each node to communicate with a particular parent (and thus, in the reverse, to communicate with a child, if one exists). These selected links form the DAG 410 (shown as bolded lines), which extends from the root node toward one or more leaf nodes (nodes without children). Traffic/packets 140 (shown in FIG. 1) may then traverse the DAG 410 in either the upward direction toward the root or downward toward the leaf nodes.

As noted above, LLN link technologies are typically resource-constrained, with low bit rates and channel capacity. Furthermore, LLN link technologies are typically lossy with relatively high bit/packet error rates that change over time and are strongly affected by environmental conditions. These characteristics occur in both wireless (e.g. IEEE 802.15.4) and wired links (e.g. Power Line Communication) such as IEEE 61334, IEEE P1901.2 and others. Because of their resource-constraints and lossy nature, "misbehaving" nodes may have a dramatic impact on the overall network. For instance, distributed protocols can react poorly to misbehaving nodes (e.g., nodes which do not strictly adhere to the agreed upon protocol), thus compromising the overall performance of the network.

For example, while RPL distributes routing parameters from the DAG root, a node may misbehave (due to misconfiguration, buggy operation, software issues, etc.) and advertise routing updates (DIO messages) that trigger neighboring nodes to advertise routing updates with a high frequency, consuming channel capacity and energy in the whole network. This is just one example use case illustrating how a single misbehaving node can have a significant adverse impact on the LLN. Also, as another example, utility companies often award AMI contracts to more than a single vendor. As such, standards are of the utmost importance, allowing utilities to mix nodes from different vendors in their network. That being said, standards are sometimes complex, and may be unintentionally misunderstood, and program code may have troublesome defects, each of which can lead to operational issues that are often difficult to detect. Further, security attacks (i.e., maliciously configured devices) may pose a further threat to the stability of an otherwise behaving network.

### Management of Misbehaving Nodes

The techniques herein provide a mechanism that manages misbehaving nodes in a computer network by detecting such misbehavior and taking appropriate measures to isolate the misbehaving node. In particular, as described in greater detail below, the techniques herein allow nodes in a network (e.g., mesh network) to examine each other's behavior, such that if a node detects that any of its neighbors exhibits an abnormal behavior, it alerts an NMS about it, thus potentially triggering isolation of this node.

Specifically, according to one or more embodiments of the disclosure as described in detail below, a node in a computer network 100 may detect a misbehaving node in the computer network based on the misbehaving node acting in violation of one or more rules. As such, the node communicates information regarding the misbehaving node to a network management system (NMS), which receives the communicated information and determines whether the misbehaving node should be isolated based on the communicated information. If the misbehaving node should be isolated, then the NMS determines isolation instructions regarding how to isolate the misbehaving node from the computer network, and transmits the isolation instructions to one or more nodes in the computer network, accordingly. The network nodes (e.g., and/or the detecting node) receive the isolation instructions and may performs the isolation instructions, accordingly.

Illustratively, the techniques described herein may be performed by hardware, software, and/or firmware, such as in accordance with monitor process 248 and NMS process 243, which may each contain computer executable instructions executed by processor 220 to perform functions relating to the novel techniques described herein, depending upon which device is performing the function. For example, the techniques herein may be treated as extensions to conventional protocols, such as the RPL protocol, and as such, would be processed by similar components understood in the art that execute the RPL protocol, accordingly.

Operationally, nodes 200 in the network 100 may be configured to execute the monitor process 248 to identify "misbehaving nodes" in the network. In particular, as defined herein, a "misbehaving node" is classified as a node that is acting in violation of one or more rules (that is, either has not complied with a rule, or has performed an action defined by a rule as misbehavior). Two illustrative types of rules may be defined: hard rules and soft rules.

Hard rules may generally be associated with undesirable behaviors that can be classified without statistical analysis and/or behaviors that require immediate action. Hard rules, for example, may be determined by comparing an observation of a single node to a static rule that describes expected behavior. For instance, RPL specifies a message called the DIS (DODAG Information Solicitation) message that is sent under specific circumstances so as to discover DAG neighbors and join a DAG or restore connectivity, as noted above. Well-behaved nodes are supposed to send DIS messages, wait for some time, and potentially resend a DIS message upon the expiration of a periodic or exponentially incremented timer. If a node starts sending DIS messages at an unacceptable frequency (e.g. more than "N" DIS messages per minute), this can have severe impact by triggering replies from a potentially large number of nodes, causing congestion. Other hard rules may of course be defined, such that hard rules may be generally classified as rules where a single violation of which results in "detecting a misbehaving node,"

Soft rules, on the other hand, are generally associated with undesirable behaviors that may require statistical analysis for classification. Soft rules, for example, may require aggregating observations from multiple nodes and determining if one or more nodes appear as outliers. For example, a node may send DIO messages reflecting path cost changes too often (e.g., not using low-pass filters, which limit notifications of change to larger changes only). It is worth noting that sending a new DIO has the effect of resetting "trickle" timers along the DAG (as will be understood by those skilled in the art), thus generating more traffic, requiring that all nodes rerun their Objective Function (OF). Another example soft rule is the use of "1+1" protection for some traffic. "1+1" protection allows a node to send two copies of the same packet along diverse paths for redundancy, the use of which being generally limited for the purpose for critical traffic. A misbehaving node, however, may send "1+1" traffic for all traffic that would adversely affect other nodes in the network. Other soft rules may be defined, such that soft rules may be generally classified as rules where a decision is made as to whether to detect the misbehaving node based on behavioral analysis.

The rules (hard and/or soft) may be configured on the network nodes 200, though illustratively the rules are communicated from the NMS into the computer network. In accordance with one embodiment, the soft and/or hard rules can be preloaded onto a node 200 from the NMS system upon joining the DAG 410. Alternatively, such as where a DAG is not in use, the rules may be distributed by any suitable distribution protocol (e.g., as packets 140), such as broadcast messages, multicast messages, unicast messages, etc., as may be appreciated by those skilled in the art.

Note that in accordance with yet another embodiment, the rules may be dynamically adapted, either based on administrator updates, dynamic shifts in the network (e.g., gradual traffic changes over time that may require more tightly provisioned rules, etc.), and so on. For instance, the NMS may host a learning engine, adapting the set of soft and hard rules according to the network history so as to protect it from new types of misbehaviors. For example, each time a node experiences congestion, the learning engine may be called upon to examine the traffic patterns. The learning engine may then examine the messages that have contributed to the congestion and uses this information to create a template of message flow that could be an indicative of future congestion.

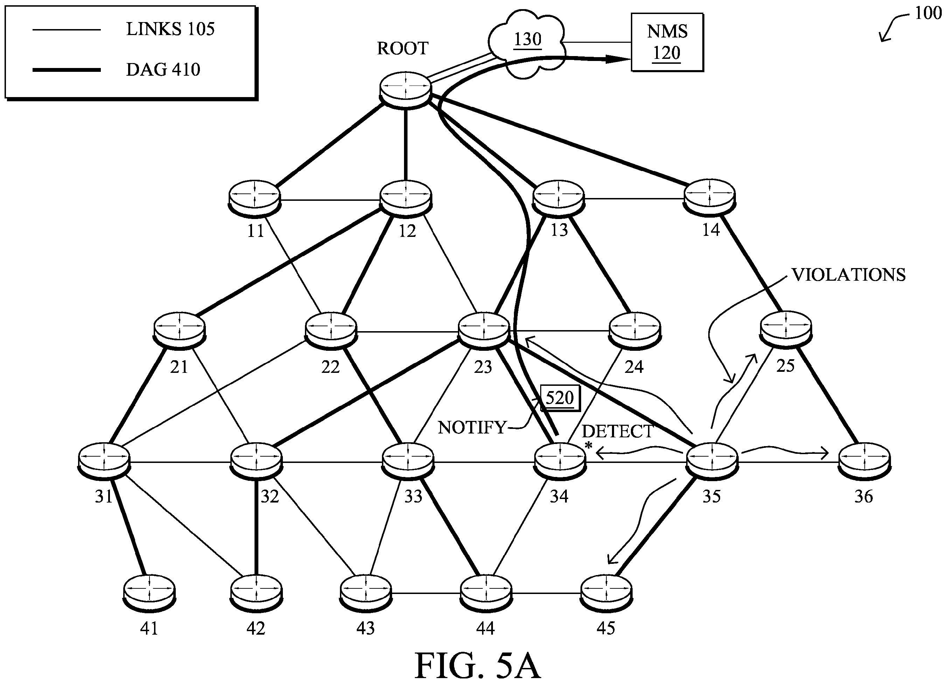

As shown in FIG. 5A, upon "detecting" a misbehaving node (e.g., node 35), a detecting node (e.g., node 34) communicates to the NMS information 520 comprising identification of the misbehaving node. In the case of hard rules, the communicated information may also contain identification of the one or more violated hard rules, while for soft rules, is may also contain identification of actions performed by the misbehaving node in violation of the soft rules. In particular, in accordance with one implementation of the embodiments herein, the classification of misbehavior (breaking a soft or a hard rule) is performed by the detecting node which identifies the misbehavior. However, in accordance with another implementation, the detecting nodes only send an alert to the NMS with their detailed observations, and the classification is performed by the NMS (or other head-end application).

In the case of the classification being performed by the NMS, generally a behavioral and/or statistical analysis may be performed based on the received information from the one detecting node, or from a plurality of detecting nodes sending information regarding the potentially misbehaving node. As such, upon receiving communicated information regarding a misbehaving node, the NMS can determine whether the misbehaving node should be isolated based on the communicated information. In particular, by collecting information about misbehaving nodes, the NMS can aggregate and correlate information from multiple sources (i.e., different monitoring processes hosted by different nodes) and make an informed (e.g., better) determination of whether or not the identified devices are truly misbehaving. Furthermore, the NMS can make a more informed determination of how to react to the misbehaving devices.

Using a centralized approach over a distributed to aggregate and analyze the communicated information to determine whether the misbehaving node should be isolated (or classified as misbehaving) has many advantages. First, the NMS can aggregate information received from multiple sources (detecting nodes) to assist in determining whether or not a node is misbehaving. For example, consider a reported misbehaving node 35 with a set of 'M' neighbors. The NMS may consider the number of 'm' neighbors (e.g., a subset of M) that are reporting node 35 as misbehaving. Second, the NMS can weigh the importance of misbehaving node reports based on the network topology, firmware version on the specific nodes, the manufacturer of the offending misbehaving node, etc. For example, in considering the number of m neighbors that are reporting node 35 as misbehaving, less weight may be given to those neighbors that must communicate through node 35. The intuition is that because node 35 is misbehaving, reports from devices that must communicate through node 35 are less reliable. Moreover, a distributed approach may be beneficial where behavior is deemed suspicious but that may not require an immediate action. In this instance, the NMS may trigger a polling mechanism where it consults other neighboring nodes of the misbehaving node whether the suspicious node should be quarantined.

As an example of misbehaving node detection, consider a set of 'M' nodes {23, 25, 34, 36, 45} in direct range of node 35. Each node in M executes the monitoring process 248, and if it detects that a node, such as node 35, violates one of the hard rules, it notifies the NMS, accordingly. For example, node 34 may detect that node 35 sends more than ten DIS messages per minute. Soft rules, on the other hand, may involve aggregation of observed behaviors of multiple different nodes. For example, node 34 may observe to what degree its neighbors change their routing costs. If only one node 35 is changing its routing costs by a large amount and relatively frequently while the others maintain a relatively constant routing cost, then 34 may detect that 35 is misbehaving and notifies the NMS. Note that in this instance, the soft rule violation is detected by a single node observing a difference in behavior of other nodes in its vicinity, i.e., that node 35 changes its routing costs more frequently than other neighbors. However, other soft rule violations may be based on aggregation of information at the NMS, such as node 34 and node 36 both indicating that node 35 is changing a cost frequently, but then the NMS may make a determination of whether the soft rule is violated based on aggregating knowledge from other nodes (e.g., the fact that nodes 23, 25, and 45 do not report it, or the fact that other nodes also report frequent cost changes, implying that there is a problem within the network other than a misbehaving node, etc.).

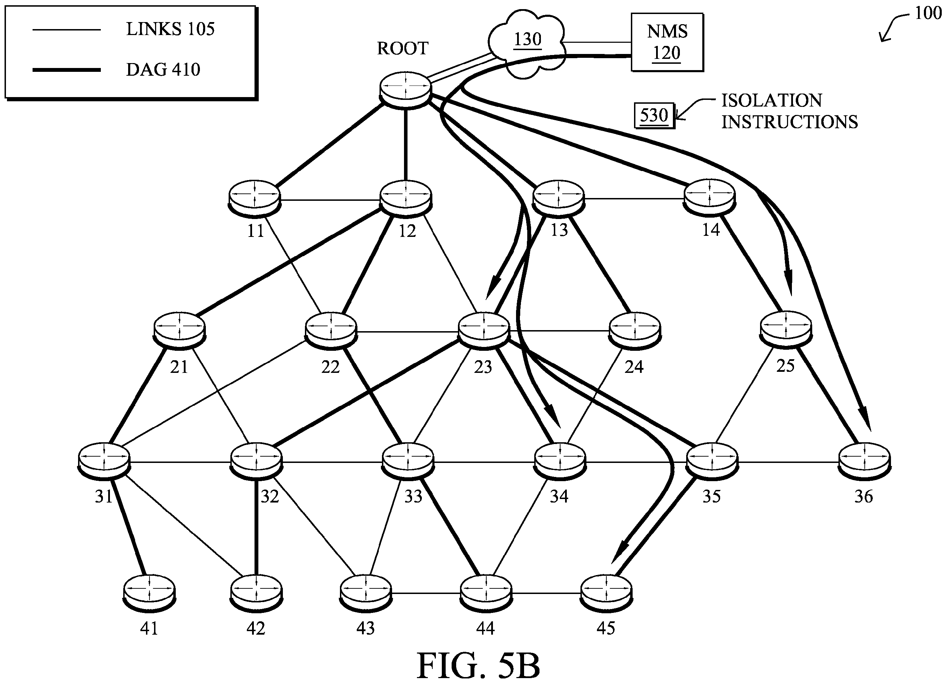

Once the misbehaving node is identified, whether by the detecting node(s) or the NMS, then the NMS may determine an appropriate set of isolation instructions to transmit to one or more nodes in the computer network, such that they are performed by the receiving nodes (isolation instructions 530 in FIG. 5B) to isolate the misbehaving node, accordingly. Specifically, the NMS determines a way to isolate nodes that are deemed to be misbehaving in order to prevent any further adverse impact to the overall system. Notably, the NMS can require each device to communicate misbehavior reports and/or isolation instructions using pair-wise end-to-end security associations. Such secure communications between the node and the NMS may make it more difficult for a malicious device to mount attacks (e.g. by spoofing messages or mounting a record-replay attack).

In deciding how to isolate the misbehaving node, the NMS can consider the overall cost of the misbehaving node. Such criteria may include a local vs. global effect, an importance of the affected devices, etc. For example, a local effect may involve a device sending more local traffic than necessary but does not trigger other traffic throughout the system. However, a global effect may involve a device that is triggering routing updates too frequently, causing new route information to propagate throughout the network more frequently than necessary. Also, a misbehaving device may affect some devices more than others (e.g., a misbehaving device may be more likely to affect its children than its parents). The NMS can utilize its knowledge of the routing topology along with other information communicated by the nodes sending reports to help determine the cost of a misbehaving device.

Similarly, when deciding how to isolate the misbehaving node, the NMS can determine the overall benefit of isolating a misbehaving device. For example, isolating a misbehaving device may mean that its children will no longer be connected to the network. In some cases, it may be better to continue to allow the misbehaving device to exist so that its children can continue to communicate, albeit with reduced capabilities.

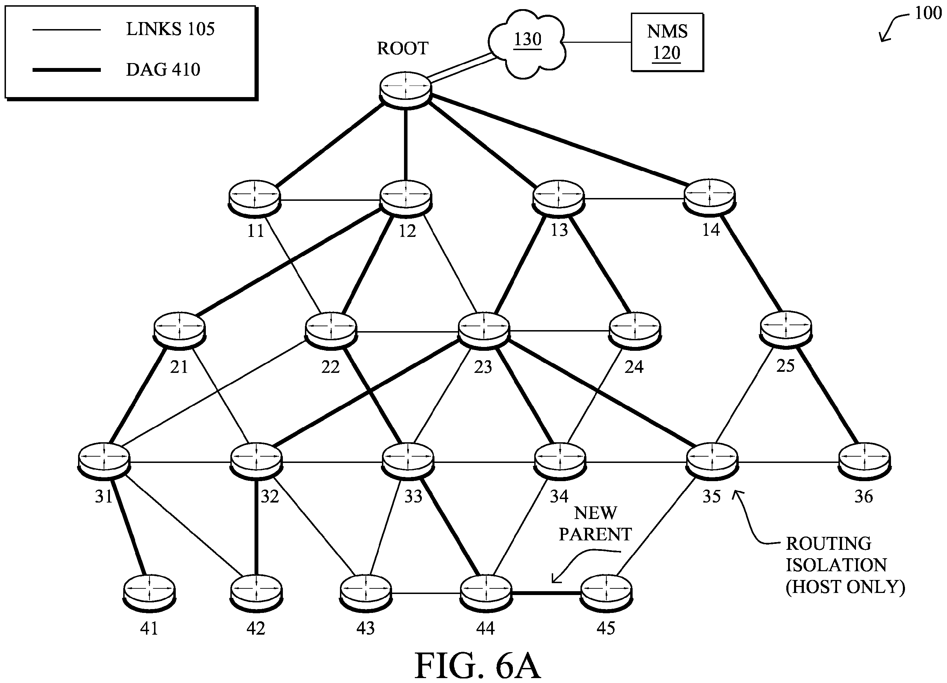

Depending on the nature of the misbehavior, devices in a LLN may take different actions to isolate the misbehaving device. With reference to FIGS. 6A-D, such isolation instructions (actions) may illustratively comprise routing isolation instructions, network-layer isolation instructions, link-layer isolation instructions, and physical-layer isolation instructions.

Routing isolation, as illustrated in FIG. 6A, generally consists of ignoring routing protocol messages from a misbehaving device. With routing isolation, a misbehaving device will not be able to act as an intermediate router and affect routing decisions within the network 100. However, the isolated device may participate as a host (a.k.a., leaf or edge device), continuing to allow network-layer communication.

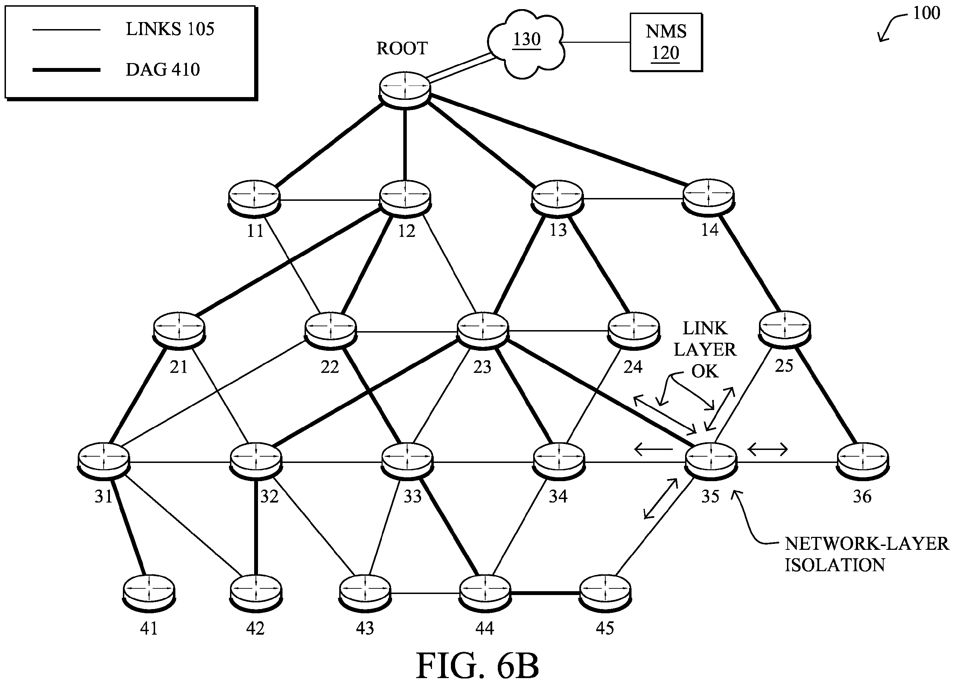

Network-layer isolation, as illustrated in FIG. 6B, generally consists of ignoring all network-layer messages from a misbehaving device. With network-layer isolation, a misbehaving device will not be able to generate or forward network-layer traffic or affect network-layer decisions across the network. However, the isolated device can continue to communicate at the link layer, allowing the device to support limited management capabilities.

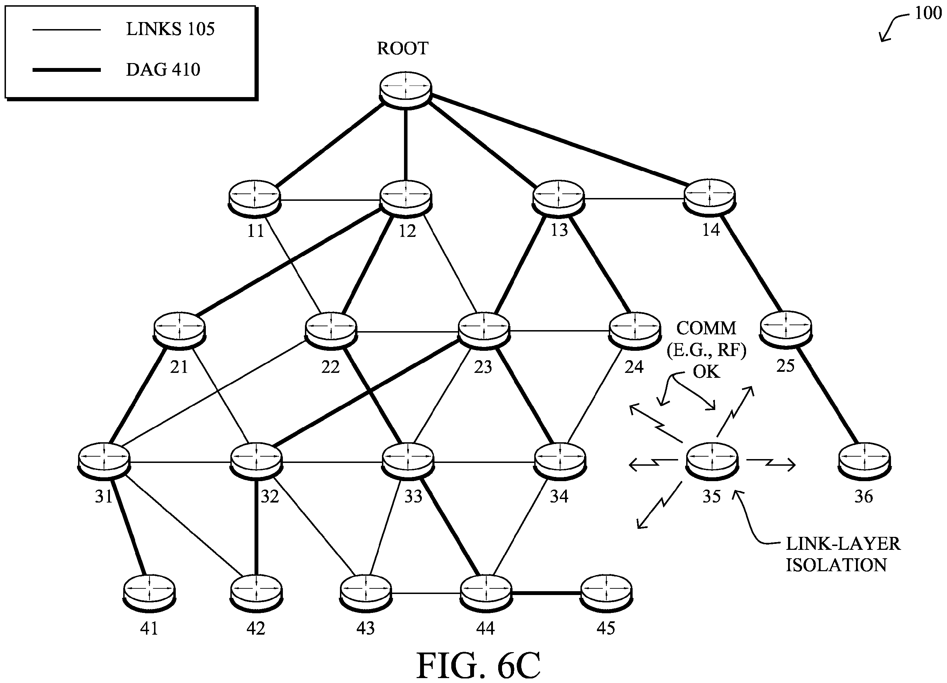

Link-layer isolation, as illustrated in FIG. 6C, generally consists of ignoring all link-layer messages from a misbehaving device. With link-layer isolation, a misbehaving device will not be able to generate link-layer messages that will be received by neighboring devices. In one embodiment, a blacklist may indicate which devices to ignore traffic from. In another embodiment, link-layer security mechanisms may be used to ignore traffic by changing the security key in use among well-behaved devices (i.e., such that "ignoring" link-layer messages comprises operating according to a security key not shared with the misbehaving node). Note that link-layer isolation does not prevent a misbehaving device from occupying the channel of neighboring devices.

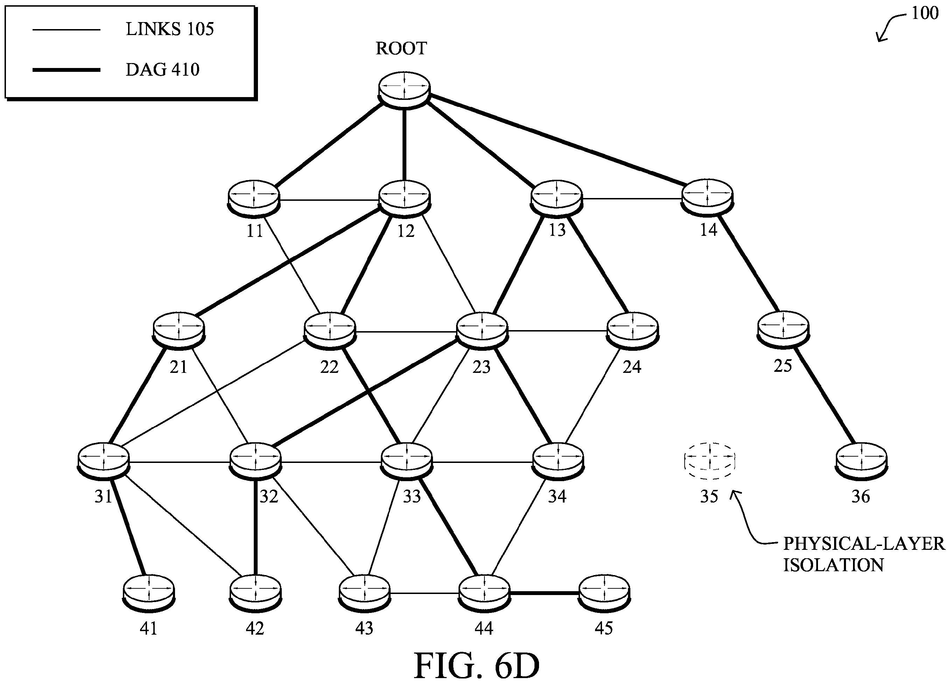

Physical-layer isolation, as illustrated in FIG. 6D, however, generally, consists of using the physical layer in a way that minimizes any effects from misbehaving devices transmitting messages. With physical-layer isolation, well-behaved devices attempt to avoid using channels at times when a misbehaving device is transmitting, thus communicating on communication channels other than those used by the misbehaving node (e.g., orthogonal channels). In one embodiment, a single-channel system may switch well-behaved devices to a different channel. In another embodiment, a channel-hopping system may choose to configure a different channel-hopping pattern on well-behaved devices to avoid repeated collisions with misbehaving devices. Note that is may be beneficial to occasionally allow for channel overlap in order to "check back" with the misbehaving node to determine whether it is still in violation of the rules, or to determine whether it has any urgent messages or alarms, etc.

The different forms of isolation represent a tradeoff in the degree of isolation and reduced capabilities allowed for the misbehaving device. Physical-layer isolation represents the most severe form of isolation, where the goal is to make the misbehaving device appear as if it is no longer transmitting within the network. Conversely, routing isolation represents a fairly lenient form of isolation, where a device cannot participate or affect routing decisions but can continue to operate as a host and communicate at the network layer.

The isolation instructions 530 may be transmitted to the appropriate network nodes in a variety of manners. For example, the transmission may be a direct communication to the detecting node(s) to perform specific actions, or to one or more other nodes (e.g., a unicast message to a plurality of nodes or a broadcast message to the entire network) that instructs/informs those nodes. For instance, in one embodiment, the NMS may notify devices of isolated nodes by including them in a DIO sub-option 328, relying on RPL's propagation to disseminate information throughout the network. In another embodiment, the NMS indicates to a Field Area Router (e.g., the root device of a DAG or otherwise) that it should change the link-layer mesh key, network-wide hopping sequence, etc.

Note that as an alternative, the isolation instructions may instead comprise instructions for the misbehaving node, directly. That is, the transmitted isolation instructions may be sent from the NMS to the misbehaving node, and may include such things as a "fake" (i.e., wrong) security key, a fake channel configuration, etc., in order to forcefully "trick" the misbehaving node into isolating itself. Additionally, for otherwise cooperating devices, simple requests to isolate themselves may be sent to misbehaving nodes (e.g., "stop transmitting routing messages" or "act as a host only").

According to a specific embodiment, a misbehaving node might be isolated for a specific period of time (in quarantine). Also, according to another embodiment, upon receiving a DIS message from a new node, a node aware of the presence of a misbehaving node may be configured to inform the new joining node of the identity of the misbehaving node. Still further, in another embodiment, a node which is marked as misbehaving may be excluded from future behavior assessments (misbehavior classifications) of other nodes.

In addition, according to one or more embodiments herein, a detecting node may decide in some cases not to report a misbehaving node, such as where the detecting node suspects that the misbehaving node is misbehaving simply for the purpose of having its neighbors generate many reports that would create congestion in the network (e.g., a denial of service or "DoS" attack). Also, in one or more embodiments, detecting nodes reporting misbehaving nodes may rate limit the sending of reports, such as sending only a first report upon detection, a report only every so many times a violation occurs (e.g., every other, every third, etc.), or other rate limiting techniques.

It should be further noted that in the event a node is classified as misbehaving, exhibits violations of certain rules, and/or has isolation actions taken against it, a system administrator may be notified of the condition, such that external (e.g., manual) intervention/action may be performed.

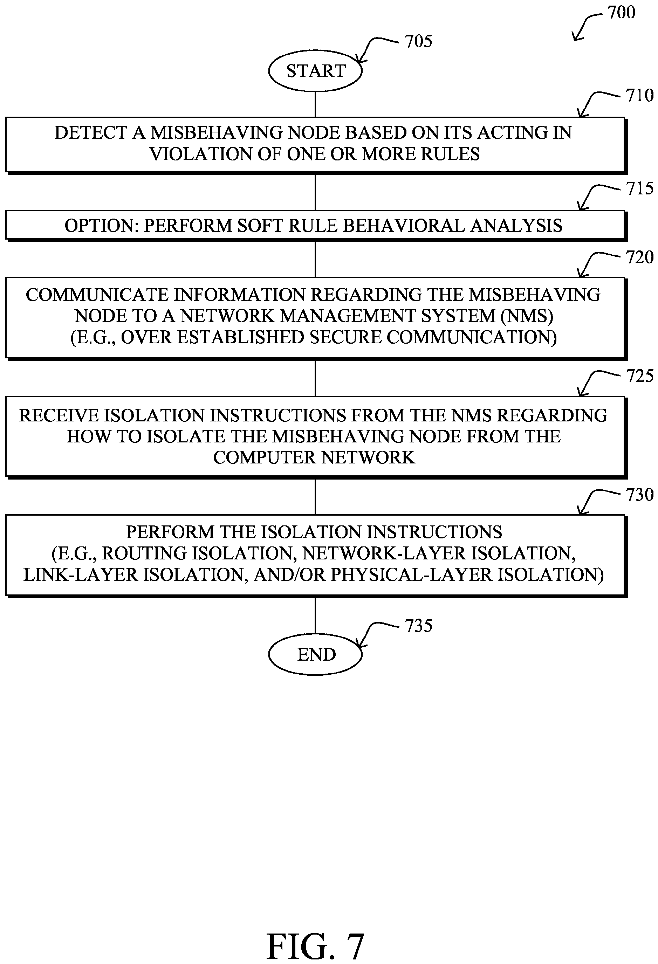

FIG. 7 illustrates an example simplified procedure for managing misbehaving nodes in accordance with one or more embodiments described herein, e.g., from the perspective a network node. The procedure 700 starts at step 705, and continues to step 710, where, as described in detail above, a node (e.g., node 25) detects a misbehaving node (e.g., node 35) based on its acting in violation of one or more rules 245a. As part of this detection, in certain embodiments, the detecting node may optionally perform soft rule behavioral analysis in step 715, as also described above. Information regarding the misbehaving node may then be communicated by the detecting node in step 720 to an NMS, e.g., over an established secure communication, such as in messages 520.

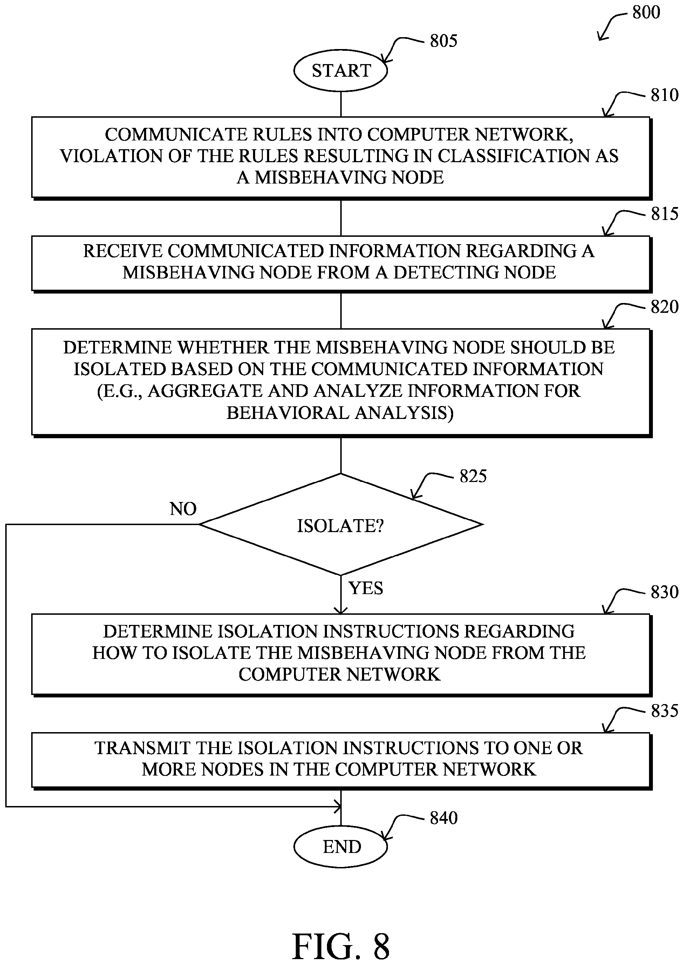

After the NMS has decided on a course of action (e.g., as detailed in FIG. 8 below), in step 725 the detecting node (e.g., and/or other nodes in the network) may then receive isolation instructions 530 from the NMS regarding how to isolate the misbehaving node from the computer network 100. For instance, as explained above, illustrative isolation techniques may involve routing isolation, network-layer isolation, link-layer isolation, or physical-layer isolation. In step 730, the nodes receiving the isolation instructions may perform them, accordingly, to isolate the misbehaving node. The procedure 700 ends in step 735, notably with the option to receive additional isolation instructions (e.g., to end the isolation), report additional misbehaving nodes, etc.

In addition, FIG. 8 illustrates another example simplified procedure for managing misbehaving nodes in accordance with one or more embodiments described herein, e.g., from the perspective an NMS (e.g., the NMS, root node, or other head-end device). The procedure 800 starts at step 805, and continues to step 810, where the NMS may communicate one or more rules into the computer network, e.g., hard and/or soft rules, the violation of which resulting in classification as a misbehaving node, as described above. Based on these rules, in step 815 the NMS may receive communicated information 520 from a detecting node regarding a misbehaving node in the network. As such, the NMS may then determine in step 820 whether the misbehaving node should be isolated based on the communicated information. For example, as noted above, the NMS may make such a determination based on aggregating and analyzing information from multiple sources (or multiple reports from a single detecting node) for a behavioral analysis. In addition, this determination may be made based on the importance of the misbehaving node, as described in detail herein.

If the decision resultant in step 825 is to isolate the misbehaving node, then in step 830 the NMS may next determine an appropriate set of isolation instructions regarding how to isolate the misbehaving node from the computer network. Once the isolation instructions are selected, then they may be transmitted in step 835 to one or more nodes in the computer network, such as the detecting node and/or other nodes in the network, accordingly. As mentioned above, the isolation instructions 530 may be carried in protocol messages (e.g., message 300), secure communication messages, etc. The procedure 800 ends in step 840, with the ability to return to steps above to establish new rules, receive further information regarding the same or other misbehaving nodes, update isolation instructions, etc. Alternatively, if the decision resultant in step 825 is to not isolate the misbehaving node, then the logic ends in step 840, again with the ability to return to steps above to establish new rules, receive further information regarding the same or other misbehaving nodes, update isolation instructions, etc.

It should be noted that FIGS. 7-8 are merely examples for illustration, and are not meant to be limiting to the scope of the embodiments herein. For instance, while certain steps within the procedures 700 and 800 may be optional as described above, certain steps may be included or excluded as desired, and the steps may also be in a different order where suitable.

The novel techniques described herein, therefore, manage misbehaving nodes in a computer network. In particular, the issue of misbehaving nodes because of misconfiguration or misunderstanding of standards can broadly impact the operation of a network, especially in certain networks (e.g., in smart object networks) that are highly constrained and usually made of a large number of nodes. The techniques herein, therefore, define a self-protection mechanism where a distributed alerting algorithm is used to detect misbehaving nodes and, in conjunction with the NMS, isolates these nodes, thus protecting the network from major outages and potential collapse, life duration shortage, or performance degradation. Note also that the techniques above allow for isolation of a misbehaving network/mesh node that is non-cooperative and/or that is provided by another vendor, and as such the misbehaving node need not have any specific processes running thereon in order to have the network as a whole benefit from the isolation techniques above.

While there have been shown and described illustrative embodiments that manage misbehaving nodes in a computer network, it is to be understood that various other adaptations and modifications may be made within the scope of the appended claims. For example, the embodiments have been shown and described herein with relation to LLNs, and more particularly, to the RPL protocol. However, the embodiments in their broader sense are not as limited, and may, in fact, be used with other types of networks and/or protocols, particularly those that may be highly constrained or made of a large number of nodes. Also, while the techniques described above make reference to wireless communication or other shared media (e.g., PLC), other types of communication media (e.g., wired) may also be used.

Further, while the term "NMS" is used herein, the term NMS is used herein generally to indicate a management entity, whether that is a centralized NMS server for the whole network or a software program running on a device (e.g., a router) in the network. In particular, an "NMS" may be centralized as device 120 is shown, or else may be distributed, thus allowing for distributing the decisions in the network. For instance, a distributed approach is advantageous to avoid congested areas close to a central NMS system.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/etc.) having program instructions executing on a computer, hardware, firmware, or a combination thereof. Accordingly this description is to be taken only by way of example and not to otherwise limit the scope of the appended claims. Therefore, it is the object of the appended claims to cover all such variations and modifications.

## Claims

1. A method (700) comprising:
detecting (710), by a node in a computer network, a misbehaving node in the computer network, the misbehaving node being detected based on the misbehaving node acting in violation of one or more rules, the one or more rules comprising:
one or more hard rules for which a single violation results in detecting the misbehaving node, and
one or more soft rules for which a decision is made as to whether to detect the misbehaving node based on behavioral analysis;
communicating (720) information regarding the misbehaving node to a network management system, NMS, the communicated information comprising identification of the misbehaving node;
receiving (725) isolation instructions from the NMS regarding how to isolate the misbehaving node from the computer network, wherein, when the misbehaving node violated one or more soft rules, the NMS is configured to:
decide whether to isolate the misbehaving node based on behavioral analysis and on aggregated communicated information received from multiple nodes, and
weigh an importance of misbehaving node reports based on the network topology and/or firmware version on the multiple nodes and/or the manufacturer of the misbehaving node; and
performing (730) the isolation instructions.

2. A method (800) comprising:
receiving (815), by a network management system, NMS, communicated information regarding a misbehaving node from one or more detecting nodes in a computer network, the communicated information comprising identification of the misbehaving node, the misbehaving node being detected based on the misbehaving node acting in violation of one or more rules, the one or more rules comprising:
one or more hard rules for which a single violation results in detecting the misbehaving node, and
one or more soft rules for which a decision is made as to whether to detect the misbehaving node based on behavioral analysis;
determining (820) whether the misbehaving node should be isolated based on the communicated information;
determining (830) isolation instructions regarding how to isolate the misbehaving node from the computer network in response to determining to isolate the misbehaving node, wherein, when the misbehaving node violated one or more soft rules, the NMS is configured to:
decide whether to isolate the misbehaving node based on behavioral analysis and on aggregated communicated information received from multiple nodes, and
weigh an importance of misbehaving node reports based on the network topology and/or firmware version on the multiple nodes and/or the manufacturer of the misbehaving node; and
transmitting (835) the isolation instructions from the NMS to one or more nodes in the computer network.

3. The method (700, 800) as in claim 1 or 2, wherein when the misbehaving node violated one or more hard rules, the communicated information comprises identification of the one or more violated rules.

4. The method (700, 800) as in claim 1 or 2, wherein when the misbehaving node violated one or more soft rules, the communicated information comprises identification of the one or more violated rules and optionally identification of actions performed by the misbehaving node in violation of soft rules.

5. The method (700, 800) as in claim 4, wherein the communicated information comprises identification of actions performed by the misbehaving node in violation of the soft rules.

6. The method (700, 800) as in claim 1 or 2, further comprising:
establishing a secure communication between the node and the NMS for the communicated information and received isolation instructions.

7. The method (700, 800) as in claim 1 or 2, wherein the isolation instructions comprise routing isolation instructions to ignore routing protocol messages from the misbehaving node.

8. The method (700, 800) as in claim 1 or 2, wherein the isolation instructions comprise network-layer isolation instructions to ignore network-layer messages from the misbehaving node.

9. The method (700, 800) as in claim 1 or 2, wherein the isolation instructions comprise link-layer isolation instructions to ignore link-layer messages from the misbehaving node.

10. The method (700, 800) as in claim 9, wherein the isolation instructions comprise a security key not shared with the misbehaving node.

11. The method (700, 800) as in claim 1 or 2, wherein the isolation instructions comprise physical-layer isolation instructions to communicate on communication channels other than those used by the misbehaving node.

12. An apparatus (200) comprising:
one or more network interfaces (210) to communicate in computer network;
a processor (220) coupled to the network interfaces and adapted to execute one or more processes; and
a memory (240) configured to store a process executable by the processor, the process when executed operable to perform a method according to any one of claims 1 to 11.

## Patentansprüche

1. Verfahren (700), umfassend:
durch einen Knoten in einem Computernetzwerk Erkennen (710) eines fehlverhaltenden Knotens in dem Computernetzwerk, wobei der fehlverhaltende Knoten auf der Basis davon erkannt wird, dass der fehlverhaltende Knoten gegen eine oder mehrere Regeln verstößt, wobei die eine oder die mehreren Regeln Folgendes umfassen:
eine oder mehrere harte Regeln, für die ein einziger Verstoß zum Erkennen des fehlverhaltenden Knotens führt, und
eine oder mehrere weiche Regeln, für die eine Entscheidung gefällt wird, ob der fehlverhaltende Knoten auf der Basis einer Verhaltensanalyse erkannt werden soll;
Kommunizieren (720) von Informationen in Bezug auf den fehlverhaltenden Knoten an ein Netzwerkmanagementsystem, NMS, wobei die kommunizierten Informationen eine Identifizierung des fehlverhaltenden Knotens umfassen;
Empfangen (725) von Isolierungsanweisungen von dem NMS in Bezug darauf, wie der fehlverhaltende Knoten von dem Computernetzwerk zu isolieren ist, wobei, wenn der fehlverhaltende Knoten gegen eine oder mehrere weiche Regeln verstoßen hat, das NMS zu Folgendem konfiguriert ist:
Entscheiden, ob der fehlverhaltende Knoten auf der Basis einer Verhaltensanalyse und von aggregierten kommunizierten Informationen, die von mehreren Knoten empfangen wurden, isoliert werden soll, und
Abwägen einer Wichtigkeit von Berichten zu fehlverhaltenden Knoten auf der Basis der Netzwerktopologie und/oder der Firmwareversion auf den mehreren Knoten und/oder des Herstellers des fehlverhaltenden Knotens; und
Durchführen (730) der Isolierungsanweisungen.

2. Verfahren (800), umfassend:
Empfangen (815) von kommunizierten Informationen in Bezug auf einen fehlverhaltenden Knoten von einem oder mehreren erkennenden Knoten in einem Computernetzwerk durch ein Netwerkmanagementsystem, NMS, wobei die kommunizierten Informationen eine Identifizierung des fehlverhaltenden Knotens umfassen, wobei der fehlverhaltende Knoten auf der Basis davon erkannt wird, dass der fehlverhaltende Knoten gegen eine oder mehrere Regeln verstößt, wobei die eine oder die mehreren Regeln Folgendes umfassen:
eine oder mehrere harte Regeln, für die ein einziger Verstoß zum Erkennen des fehlverhaltenden Knotens führt, und
eine oder mehrere weiche Regeln, für die eine Entscheidung gefällt wird, ob der fehlverhaltende Knoten auf der Basis einer Verhaltensanalyse erkannt werden soll;
Bestimmen (820), ob der fehlverhaltende Knoten isoliert werden sollte, auf Basis der kommunizierten Informationen;
Bestimmen (830) von Isolierungsanweisungen in Bezug darauf, wie der fehlverhaltende Knoten von dem Computernetzwerk zu isolieren ist, als Reaktion auf ein Bestimmen, den fehlverhaltenden Knoten zu isolieren, wobei, wenn der fehlverhaltende Knoten gegen eine oder mehrere weiche Regeln verstoßen hat, das NMS zu Folgendem konfiguriert ist:
Entscheiden, ob der fehlverhaltende Knoten auf der Basis einer Verhaltensanalyse und von aggregierten kommunizierten Informationen, die von mehreren Knoten empfangen wurden, isoliert werden soll, und
Abwägen einer Wichtigkeit von Berichten zu fehlverhaltenden Knoten auf der Basis der Netzwerktopologie und/oder der Firmwareversion auf den mehreren Knoten und/oder des Herstellers des fehlverhaltenden Knotens; und
Übertragen (835) der Isolierungsanweisungen von dem NMS an einen oder mehrere Knoten in dem Computernetzwerk.

3. Verfahren (700, 800) nach Anspruch 1 oder 2, wobei, wenn der fehlverhaltende Knoten gegen eine oder mehrere harte Regeln verstoßen hat, die kommunizierten Informationen eine Identifizierung der einen oder der mehreren Regeln, gegen die verstoßen wurde, umfassen.

4. Verfahren (700, 800) nach Anspruch 1 oder 2, wobei, wenn der fehlverhaltende Knoten gegen eine oder mehrere weiche Regeln verstoßen hat, die kommunizierten Informationen eine Identifizierung der einen oder der mehreren Regeln, gegen die verstoßen wurde, und gegebenenfalls eine Identifizierung von Aktionen, die von dem fehlverhaltenden Knoten, der gegen weiche Regeln verstoßen hat, durchgeführt wurden, umfassen.

5. Verfahren (700, 800) nach Anspruch 4, wobei die kommunizierten Informationen eine Identifizierung von Aktionen, die von dem fehlverhaltenden Knoten, der gegen die weichen Regeln verstoßen hat, durchgeführt wurden, umfassen.

6. Verfahren (700, 800) nach Anspruch 1 oder 2, weiterhin umfassend:
Aufbauen einer sicheren Kommunikation zwischen dem Knoten und dem NMS für die kommunizierten Informationen und die empfangenen Isolierungsanweisungen.

7. Verfahren (700, 800) nach Anspruch 1 oder 2, wobei die Isolierungsanweisungen Routing-Isolierungsanweisungen umfassen, um Routing-Protokoll-Nachrichten von dem fehlverhaltenden Knoten zu ignorieren.

8. Verfahren (700, 800) nach Anspruch 1 oder 2, wobei die Isolierungsanweisungen Netzwerkschicht-Isolierungsanweisungen umfassen, um Netzwerkschicht-Nachrichten von dem fehlverhaltenden Knoten zu ignorieren.

9. Verfahren (700, 800) nach Anspruch 1 oder 2, wobei die Isolierungsanweisungen Verbindungsschicht-Isolierungsanweisungen umfassen, um Verbindungsschicht-Nachrichten von dem fehlverhaltenden Knoten zu ignorieren.

10. Verfahren (700, 800) nach Anspruch 9, wobei die Isolierungsanweisungen einen Sicherheitsschlüssel umfassen, der nicht mit dem fehlverhaltenden Knoten geteilt wird.

11. Verfahren (700, 800) nach Anspruch 1 oder 2, wobei die Isolierungsanweisungen Bitübertragungsschicht-Isolierungsanweisungen umfassen, um auf Kommunikationskanälen zu kommunizieren, die sich von den von dem fehlverhaltenden Knoten verwendeten unterscheiden.

12. Vorrichtung (200), umfassend:
eine oder mehrere Netzwerkschnittstellen (210) zum Kommunizieren in einem Computernetzwerk;
einen Prozessor (220), der mit den Netzwerkschnittstellen gekoppelt ist und dazu eingerichtet ist, einen oder mehrere Vorgänge auszuführen; und
einen Speicher (240), der dazu konfiguriert ist, einen Vorgang, der durch den Prozessor ausführbar ist, zu speichern, wobei der Vorgang bei Ausführung dazu betreibbar ist, ein Verfahren nach einem der Ansprüche 1 bis 11 durchzuführen.

## Revendications

1. Procédé (700) comprenant:
la détection (710), par un noeud dans un réseau informatique, d'un noeud se conduisant mal dans le réseau informatique, le noeud se conduisant mal étant détecté par le fait que le noeud se conduisant mal enfreint une ou plusieurs règles, les une ou plusieurs règles comprenant:
une ou plusieurs règles contraignantes selon lesquelles une seule infraction entraîne la détection du noeud se conduisant mal, et
une ou plusieurs règles non contraignantes selon lesquelles il est décidé de détecter ou non le noeud se conduisant mal d'après une analyse du comportement;
la communication (720) d'informations concernant le noeud se conduisant mal à un système de gestion de réseau, NMS, les informations communiquées comprenant l'identification du noeud se conduisant mal;
la réception (725) depuis le NMS d'instructions d'isolation sur la manière d'isoler le noeud se conduisant mal du réseau informatique, dans lequel, quand le noeud se conduisant mal a enfreint une ou plusieurs règles non contraignantes, le NMS est configuré pour:
décider d'isoler ou non le noeud se conduisant mal d'après une analyse du comportement et des informations communiquées agrégées reçues depuis de multiples noeuds, et
pondérer une importance de rapports de noeuds se conduisant mal en fonction de la topologie du réseau et/ou d'une version de micrologiciel sur les multiple noeuds et/ou du constructeur du noeud se conduisant mal; et
l'exécution (730) des instructions d'isolation.

2. Procédé (800) comprenant:
la réception (815), par un système de gestion de réseau, NMS, d'informations communiquées concernant un noeud se conduisant mal depuis un ou plusieurs noeuds de détection dans un réseau informatique, les informations communiquées comprenant l'identification du noeud se conduisant mal, le noeud se conduisant mal étant détecté par le fait que le noeud se conduisant mal enfreint une ou plusieurs règles, les une ou plusieurs règles comprenant:
une ou plusieurs règles contraignantes selon lesquelles une seule infraction entraîne la détection du noeud se conduisant mal, et
une ou plusieurs règles non contraignantes selon lesquelles il est décidé de détecter ou non le noeud se conduisant mal d'après une analyse du comportement;
la détermination (820) que le noeud se conduisant mal doit ou non être isolé en fonction des informations communiquées;
la détermination (830) d'instructions d'isolation sur la manière d'isoler le noeud se conduisant mal du réseau informatique en réponse à la détermination qu'il convient d'isoler le noeud se conduisant mal, dans lequel, quand le noeud se conduisant mal a enfreint une ou plusieurs règles non contraignantes, le NMS est configuré pour:
décider d'isoler ou non le noeud se conduisant mal d'après une analyse du comportement et des informations communiquées agrégées reçues depuis de multiples noeuds, et
pondérer une importance de rapports de noeuds se conduisant mal en fonction de la topologie du réseau et/ou d'une version de micrologiciel sur les multiple noeuds et/ou du constructeur du noeud se conduisant mal; et
transmettre (835) les instructions d'isolation depuis le NMS vers un ou plusieurs noeuds dans le réseau informatique.

3. Procédé (700, 800) selon la revendication 1 ou 2, dans lequel quand le noeud se conduisant mal a enfreint une ou plusieurs règles contraignantes, les informations communiquées comprennent l'identification des une ou plusieurs règles enfreintes.

4. Procédé (700, 800) selon la revendication 1 ou 2, dans lequel quand le noeud se conduisant mal a enfreint une ou plusieurs règles non contraignantes, les informations communiquées comprennent l'identification des une ou plusieurs règles enfreintes et facultativement l'identification d'actions exécutées par le noeud se conduisant mal en infraction aux règles non contraignantes.

5. Procédé (700, 800) selon la revendication 4, dans lequel les informations communiquées comprennent l'identification d'actions exécutées par le noeud se conduisant mal en infraction aux règles non contraignantes.

6. Procédé (700, 800) selon la revendication 1 ou 2, comprenant en outre:
l'établissement d'une communication sécurisée entre le noeud et le NMS pour les informations communiquées et les instructions d'isolation reçues.

7. Procédé (700, 800) selon la revendication 1 ou 2, dans lequel les instructions d'isolation comprennent des instructions d'isolation de routage pour ignorer des messages de protocole de routage provenant du noeud se conduisant mal.

8. Procédé (700, 800) selon la revendication 1 ou 2, dans lequel les instructions d'isolation comprennent des instructions d'isolation de couche réseau pour informer des messages de couche réseau provenant du noeud se conduisant mal.

9. Procédé (700, 800) selon la revendication 1 ou 2, dans lequel les instructions d'isolation comprennent des instructions d'isolation de couche liaison pour ignorer des messages de couche liaison provenant du noeud se conduisant mal.

10. Procédé (700, 800) selon la revendication 9, dans lequel les instructions d'isolation comprennent une clé de sécurité non partagée avec le noeud se conduisant mal.

11. Procédé (700, 800) selon la revendication 1 ou 2, dans lequel les instructions d'isolation comprennent des instructions d'isolation de couche physique pour communiquer sur des canaux de communication autres que ceux utilisés par le noeud se conduisant mal.

12. Appareil (200) comprenant:
une ou plusieurs interfaces réseau (210) pour communiquer dans le réseau informatique;
un processeur (220) couplé aux interfaces réseau et adapté pour exécuter un ou plusieurs processus; et
une mémoire (240) configurée pour mémoriser un processus exécutable par le processeur, le processus, à son exécution, servant à exécuter un procédé selon l'une quelconque des revendications 1 à 11.
